# EUROPÄISCHE PATENTSCHRIFT

(11) **EP 1 495 477 B1**
(45) Veröffentlichungstag und Bekanntmachung des Hinweises auf die Patenterteilung: **25.02.2009**
(21) Anmeldenummer: 03709798.7
(22) Anmeldetag: 18.03.2003
(51) Int. Cl.: H01H 71/28

(54) **LEITUNGSSCHUTZSCHALTER MIT FEHLERSTROMABSCHALTUNG**
CIRCUIT BREAKER HAVING FAULT-CURRENT CUTOFF
DISJONCTEUR PRESENTANT UNE FONCTION DE COUPURE DE COURANT DE DEFAUT

(30) Priorität: 18.03.2002 DE 10211902
(43) Veröffentlichungstag der Anmeldung: 12.01.2005
(73) Patentinhaber: ETI ELEKTROELEMENT D.D., 1411 Izlake (SI)
(72) Erfinder: KOPRIVSEK, Mitja, 1410 Zagorje (SI)
(74) Vertreter: Wagner, Bernhard Peter
(86) Internationale Anmeldenummer: PCT/EP2003/002818
(87) Internationale Veröffentlichungsnummer: WO 2003/079388

(56) Entgegenhaltungen:
- EP-A- 1 083 586
- DE-A- 3 136 412
- DE-A- 10 058 075
- DE-A- 10 120 189
- DE-B- 1 022 298
- DE-B- 1 178 142
- US-A- 5 224 006

## Beschreibung

Die Erfindung betrifft einen Leitungsschutzschalter zur automatischen Unterbrechung eines elektrischen Stromflusses, insbesondere einen Leitungsschutzschalter mit Fehlerstromabschaltung, mit einem Auslöser, der einen Stößel zum Betätigen eines Schaltmechanismus' und eine Spule zur Erzeugung einer elektromagnetischen Auslösekraft aufweist, die den Stößel aus einer ersten Stellung in eine Auslösestellung bewegt.

Derartige Leitungsschutzschalter sind hinlänglich bekannt, wobei die DE 199 42 694 A1 beispielhaft einen bei derartigen Leitungsschutzschaltern verwendeten Auslöser zeigt.

In elektrischen Installationsanlagen werden die Stromkreise durch Leitungsschutzschalter gegen thermische Überlastung und gegen Kurzschluß geschützt. Die üblichen Leitungsschutzschalter sind jedoch nicht in der Lage, Personen und Sachen beim Auftreten von geringen Fehlerströmen, wie sie zum Beispiel beim Berühren spannungsführender Teile oder bei Isolationsfehlern entstehen, zu schützen. Um auch diese Gefährdung auszuschließen, werden in der Elektroinstallation seit langem sogenannte Fehlerstromschutzschalter zusätzlich zu den Leitungsschutzschaltern eingesetzt.

Wegen des damit verbundenen großen Platzbedarfs wurden bereits kombinierte Schutzschaltgeräte entwickelt, die zusätzlich zu den Eigenschaften eines Leitungsschutzschalters auch die Eigenschaften eines Fehlerstromschutzschalters aufweisen. Ein Beispiel für derartige kombinierte Schutzschaltgeräte ist der DE 28 34 327 C2 zu entnehmen. Das daraus bekannte kombinierte Schutzschaltgerät besitzt ein gemeinsames Schaltschloß sowie ein Kontaktsystem mit Löschkammer, einen Summenstromwandler zur Erfassung der Fehlerströme, eine Auswerteelektronik sowie je einen Auslöser, nämlich ein Bimetall zum Schutz vor thermischer Überlastung, einen Magnetauslöser für den Kurzschlußschutz und ein empfindliches Haltemagnetrelais zur Abschaltung bei auftretenden Fehlerströmen. Auch für dieses kombinierte Schutzschaltgerät ist noch ein erheblicher Platzbedarf erforderlich.

Die DE 1 178 142 B offenbart einen Leitungsschutzschalter gemäß dem Oberbegriff des Patentanspruchs 1, der eine koaxial zueinander angeordnete erste und zweite Spule aufweist, die einen axial verschiebbaren Auslösestößel umgeben, der mittels einem von der äußeren Spule betätigbaren Schlaganker sowie einem von der inneren Spule betätigbaren Klappanker in dieselbe axiale Richtung verschiebbar ist, um so auf eine Auslösewippe für einen federbeaufschlagten Unterbrechermechanismus zu dessen Auslösung einzuwirken. Des weiteren ist - gesondert von der Spulenanordnung - ein thermisches Auslöseglied vorgesehen, welches ebenfalls auf die Auslösewippe einwirkt, um den Unterbrechungsmechanismus zu betätigen.

Diese Anordnung mit zwei getrennt voneinander vorgesehenen Auslösemechanismen, dem Spulenauslösemechanismus und dem thermischen Auslösemechanismus, weist einen hohen Platzbedarf auf und der hierdurch geschaffene Leitungsschutzschalter ist nicht sehr kompakt.

Aufgabe der vorliegenden Erfindung ist es, einen gattungsgemäßen Leitungsschutzschalter anzugeben, der unter Beibehaltung einer kompakten Bauweise einen Fehlerstromschutzschalter integriert.

Diese Aufgabe wird gemäß dem im kennzeichnenden Teil des Patentanspruchs 1 angeführten Merkmalen gelöst.

Darüber hinaus ist eine zweite Spule koaxial zur ersten Spule angeordnet, wobei die zweite Spule von einem Strom durchflossen wird, der in Abhängigkeit von einem Signal gesteuert wird, welches von einem Fehlerstromdetektor als Antwort auf die Erfassung von Fehlerströmen abgegeben wird.

Durch die Anordnung der zweiten Spule koaxial zur ersten Spule erfolgt auch bei Detektion eines Fehlerstroms durch den Fehlerstromdetektor, der vorzugsweise als Summenstromwandler ausgebildet ist, eine elektromagnetische Betätigung des Stößels und damit eine Auslösung des Schaltmechanismus'. Diese Integration der zweiten Spule in den Auslöser und die sich dadurch ergebende Doppelnutzung des Auslösers führt zu einer äußerst kompakten Bauweise des die Funktion eines Fehlerstromschutzschalters integrierenden Leitungsschutzschalters, ohne daß es - wie im Stand der Technik - einer separaten Auslösevorrichtung für den Fehlerstrom bedarf.

Besonders vorteilhaft ist es, wenn der erfindungsgemäße Leitungsschutzschalter als Reiheneinbaugerät ausgebildet ist. Hierdurch ergibt sich die Möglichkeit, in bereits existierenden elektrischen Installationsanlagen vorhandene herkömmliche Leitungsschutzschalter durch den erfindungsgemäßen, den Fehlerstromschutzschalter integrierenden Leitungsschutzschalter zu ersetzen.

Die Erfindung wird nachfolgend anhand eines Beispiels unter Bezugnahme auf die Zeichnung näher erläutert. In dieser zeigt:
Figur 1 einen teilweise geschnittenen Leitungsschutzschalter;
Figur 2 einen Auslöser für einen erfindungsgemäßen Leitungsschutzschalter und
Figur 3 ein Schaltbild des erfindungsgemäßen Leitungsschutzschalters.

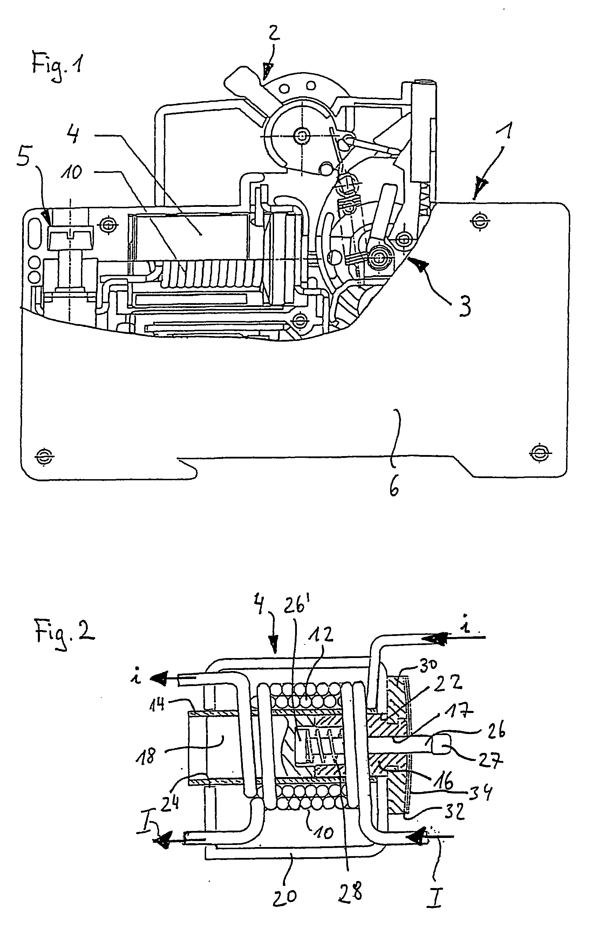

Figur 1 zeigt teilweise geschnitten einen Leitungsschutzschalter 1 mit einer Bedienungshandhabe 2, einen von der Bedienungshandhabe 2 betätigbaren Schaltmechanismus 3 und einem ebenfalls den Schaltmechanismus 3 beaufschlagenden Auslöser 4.

Der Auslöser 4 weist eine erste Spule 10 auf, die mit ihrem einen Ende elektrisch mit einer ersten Anschlußklemme 5 des Leitungsschutzschalters 1 verbunden ist. Das andere Ende der ersten Spule 10 ist mit einer (nicht gezeigten) weiteren Anschlußklemme des Leitungsschutzschalters 1 über einen vom Schaltmechanismus 3 betätigbaren Schalter verbunden.

Nachfolgend wird der Aufbau des Auslösers 4 anhand der Figur 2 näher erläutert.

Wie bereits erläutert worden ist, weist der Auslöser die erste Spule 10 auf, durch die ein zu überwachender Strom I fließt. Radial innerhalb der ersten Spule 10 ist eine zweite Spule 12 auf eine Hülse 14 gewickelt. Die Funktion der zweiten Spule 12 wird weiter unten noch erläutert werden. Um die Wärmeübertragung von der ersten Spule 10 zu einem thermischen Auslöser zu verbessern, ist es auch denkbar, daß die zweite Spule 12 radial außerhalb der ersten Spule 10 angeordnet ist. Bei außenliegender erster Spule kann auch eine Wärmeleithülse (nicht gezeigt) auf dieser gehalten sein.

Im Inneren der Hülse 14 ist ein Kern 16 vorgesehen, der bezüglich der Hülse 14 fixiert ist. Des weiteren ist in der Hülse 14 ein relativ zu dieser in Axialrichtung der Hülse 14 verschiebbarer Anker 18 vorgesehen. Der Anker 18 ist in der Hülse gleitend geführt. Ein Magnetjoch 20, das zur Schließung des Magnetfelds im Außenraum der Spule 10 dient, weist eine erste Montageöffnung 22, in der der Kern 16 gehalten ist, und eine zweite Montageöffnung 24 auf, in der das vom Kern 16 abgewandte Ende der Hülse 14 angeordnet ist. Das Magnetjoch 20 kann zugleich ein Montagegehäuse für die Montage des Auslösers 4 in einem Gehäusekörper 6 des Leitungsschutzschalters 1 bilden.

Der Kern 16 weist eine Führungsbohrung 17 auf, in der ein Stößel 26 zum Betätigen des Schaltmechanismus' 3 gleitend geführt ist. Der Stößel 26 stützt sich mit seinem im Inneren des Auslösers 4 gelegenen, radial erweiterten Endabschnitt 26' am Grund einer Sacklochbohrung des Ankers 18 ab. Eine Wendeldruckfeder 28, die sich mit ihrem einen Ende am Kern 16 und mit ihrem anderen Ende am radial erweiterten Endabschnitt 26' des Stößels 26 abstützt, hält den Stößel in Anlage an den axial verschiebbaren Anker 18, so daß sich der Stößel 26 mit dem Anker 18 mitbewegt.

An seinem die erste Montageöffnung 22 nach Außen durchdringenden Ende steht der Kern 16 mit einem Flanschelement 30 in Eingriff, wobei sich das Flanschelement 30 gegen das Magnetjoch 20 abstützt. Auf der vom Magnetjoch 20 abgewandten freien Stirnfläche des Flanschelements 30, die eine vorzugsweise konvex gewölbte Fläche bildet, sind eine Bimetallscheibe 32 und darauf eine Betätigungsscheibe 34 angeordnet. Die Bimetallscheibe 32 im kalten Zustand und die Betätigungsscheibe 34 weisen dabei eine der konvexen Stirnfläche des Flanschelements 30 entsprechende Form auf.

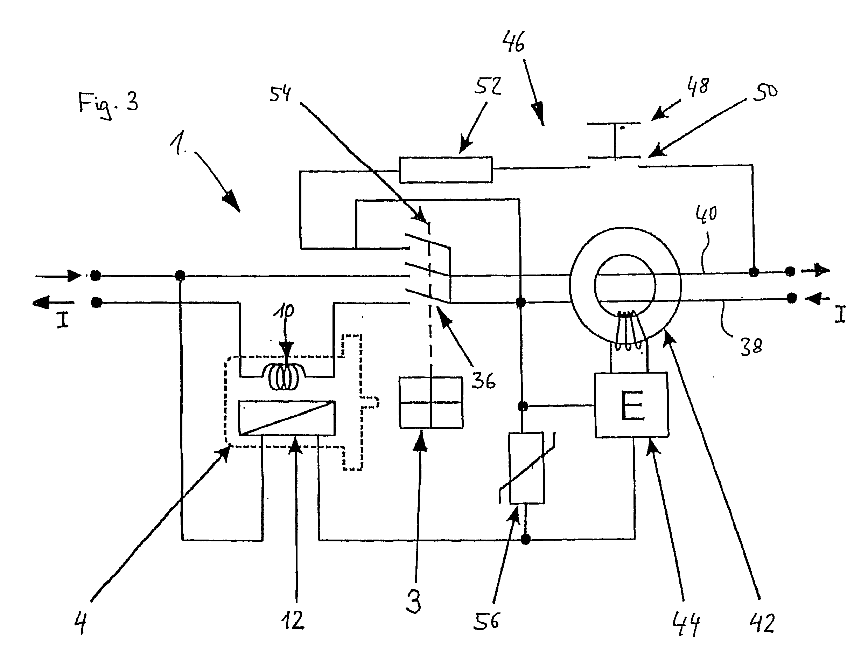

In Figur 3 ist das elektrische Schaltbild eines zweipolig ausgeführten Leitungsschutzschalters mit den Merkmalen der vorliegenden Erfindung wiedergegeben. Dieser Leitungsschutzschalter 1 erfüllt drei Schutzfunktionen, nämlich Schutz gegen Kurzschluß, Schutz gegen Überstrom und Schutz gegen Fehlerstrom.

Der zur - nicht gezeigten - zu überwachenden Last führende Strom I fließt über die Leitung 38 und den im Normalfall geschlossenen, in Figur 3 jedoch offen dargestellten Schalter 36 des Schaltmechanismus' 3 zur ersten Spule 10 und durch diese hindurch zur Last. Die von der Last zur Stromquelle zurückführende Leitung 40 ist über einen Pol des Schalters 36 durch den Leitungsschutzschalter 1 geführt.

Ein als Fehlerstromdetektor dienender Summenstromwandler 42 umgibt die Leitungen 38 und 40 und ist in der Lage einen Fehlerstrom zu detektieren. Das vom Summenstromwandler erfaßte Signal wird einer Auswerteelektronik 44 zugeführt. Diese Auswerteelektronik 4 verstärkt das Signal des Summenstromwandlers 42 und dieses verstärkte Signal wird als Strom i der zweiten Spule 12 im Auslöser 4 zugeführt, die mit ihrem anderen Ende über den Schalter 36 mit der rückfließenden Leitung 40 verbunden ist.

Des weiteren ist eine Prüfeinrichtung 46 vorgesehen, die eine Prüftaste 48 mit einem Prüfkontakt 50, einen Prüfwiderstand 52 und einen Hilfskontakt 54 im Schalter 36 aufweist. Der Hilfskontakt 54 kontaktiert nur im eingeschalteten Zustand des Schalters 36 mit dem Prüfwiderstand 7 und stellt damit sicher, daß die Auswerteelektronik 44 nur im eingeschalteten Zustand an Spannung liegt. Außerdem wird durch den Hilfskontakt 54 sichergestellt, daß die Anschlußrichtung des Leitungsschutzschalters beliebig ist. Eine derartige Prüfeinrichtung ist durch einschlägige Vorschriften vorgeschrieben und mit ihr kann die Funktion des Leitungsschutzschalters getestet werden.

Um die Auswerteelektronik 44 vor Stoßspannungen aus dem Netz zu schützen, bildet die hochohmig ausgebildete zweite Spule 12 gleichzeitig einen Schutzwiderstand für die Spannungsversorgung der Auswerteelektronik 44. Auch ein zusätzlich zwischen den Polen der Spannungsversorgung für die Auswerteelektronik 44 vorgesehener Varistor 56 ist dazu vorgesehen, bei Auftreten einer Überspannung die Spannungsversorgung der Auswerteelektronik 44 kurzzuschließen und diese damit zu schützen.

Nachfolgend wird die Funktionsweise des Leitungsschutzschalters 1 beschrieben:
Beim Auftreten eines Kurzschlusses im Bereich der lastseitigen Leitungen oder der damit verbundenen, nicht gezeigten Last steigt der Strom I impulsartig an, wodurch dieser erhöhte und durch die erste Spule 10 des Auslösers 4 fließende Strom eine auf den Anker 18 wirkende Magnetkraft erzeugt, die den Anker 18 und mit ihm den Stößel 26 nach rechts in die in Figur 2 gezeigte Stellung bewegt, wodurch der Stößel 26 auf den Schaltmechanismus 3 einwirkt, um den Schalter 36 zu öffnen und damit den Stromfluß zu unterbrechen.

Beim Auftreten eines geringfügigen Überstroms, der zu einer thermischen Belastung des Auslösers 4 führt, wird die als thermischer Auslöser dienenede Bimetallscheibe 32 so lange erwärmt, bis sie ihre Schnapp- oder Sprungtemperatur erreicht, bei der sie aus der nach links konkaven Stellung in eine konvexe Stellung umschnappt. Durch dieses Umschnappen der Bimetallscheibe 32 wird die ihre Form nicht verändernde Betätigungsscheibe 34 in Figur 2 nach rechts gedrängt und nimmt dabei den Stößel 26, der an seinem freien, aus dem Auslöser 4 herausragenden Ende mit einer Verdickung 27 versehen ist, gegen die Federkraft der Feder 28 nach rechts mit, wodurch der Stößel 26 ebenfalls auf den Schaltmechanismus 3 einwirkt, um den Schalter 36 zur Öffnung zu bringen und den Stromfluß zu unterbrechen.

Beim Auftreten eines Fehlerstroms wird dieser Fehlerstrom vom Summenstromwandler 42 detektiert und das Detektionssignal wird an die Auswerteelektronik 44 weitergeleitet, die wiederum dieses Signal verstärkt und als Strom i an die zweite Spule 12 im Auslöser 4 weiterleitet. Durch dieses verstärkte Signal baut sich in der zweiten Spule 12 ein Magnetfeld auf, das ebenfalls den Anker 18 und den damit verbundenen Stößel 26 in eine in Figur 2 nach rechts gerichtete Axialbewegung versetzt, wodurch der Stößel 26 auf den Schaltmechanismus 3 einwirkt, um den Schalter 36 zur Öffnung zu bringen und damit den Stromfluß ebenfalls zu unterbrechen.

Der erfindungsgemäße Leitungsschutzschalter integriert somit auf einfache und äußerst platzsparende Weise drei Schutzmechanismen, nämlich den thermischen Schutz, den Kurzschlußschutz und den Fehlerstromschutz. Diese Integration reduziert zudem gegenüber dem herkömmlichen Stand der Technik die Anzahl von benötigten Bauteilen, wodurch sich in der Serienfertigung erhebliche wirtschaftliche Vorteile ergeben. Die sich durch die zusätzliche Integration des Fehlerstromschutzschalters in den Leitungsschutzschalter ergebende Verlustleistung ist nicht größer als die Verlustleistung eines herkömmlichen Leitungsschutzschalters, so daß der erfindungsgemäße Leitungsschutzschalter gegenüber einer Kombination aus einem herkömmlichen Leitungsschutzschalter und einem herkömmlichen Fehlerstromschutzschalter auch im Energiehaushalt Vorteile bringt.

## Patentansprüche

1. Leitungsschutzschalter zur automatischen Unterbrechung eines elektrischen Stromflusses (I), mit einem Auslöser (4), der einen Stößel (26) zum Betätigen eines Schaltmechanismus' (3) und eine Spule (10) zur Erzeugung einer elektromagnetischen Auslösekraft aufweist, die den Stößel (26) aus einer ersten Stellung in eine Auslösestellung bewegt,
wobei eine zweite Spule (12) koaxial zur ersten Spule (10) angeordnet ist, wobei die zweite Spule (12) von einem Strom (i) durchflossen wird, der in Abhängigkeit von einem Signal gesteuert wird, welches von einem Fehlerstromdetektor (42) als Antwort auf die Erfassung von Fehlerströmen abgegeben wird,
**dadurch gekennzeichnet,**
**dass** auf einer gewölbten Fläche eines Flanschelements (30) des Auslösers (4) eine als thermischer Auslöser dienende Bimetallscheibe (32) und darauf eine Betätigungsscheibe (34) angeordnet sind, wobei die Bimetallscheibe (32) und die Betätigungsscheibe (34) vom Stößel (26) durchdrungen sind und wobei der Stößel (26) an seinem aus dem Auslöser (4) herausragenden freien Ende mit einer Verdickung (27) versehen ist, mittels der die Betätigungsscheibe (34) den Stößel (26) bei einem thermisch bedingten Umschnappen der Bimetallscheibe (32) in Auslöserichtung betätigt.

2. Leitungsschutzschalter gemäß Anspruch 1,
**dadurch gekennzeichnet,**
**dass** der Fehlerstromdetektor ein Summenstromwandler (42) ist.

3. Leitungsschutzschalter gemäß Anspruch 1,
**dadurch gekennzeichnet,**
**dass** der Leitungsschutzschalter (1) als Reiheneinbaugerät ausgebildet ist.

## Claims

1. Circuit breaker for the automatic interruption of an electric current (1) with a tripping device (4) featuring a tappet (26) for the operation of a shift mechanism (3) and a coil (10) for generating an electromagnetic release force, which moves the tappet (26) from its initial position to a release position,
whereas a second coil (12) is arranged coaxially to the first coil (10) and a current (1) flows through the second coil (12), controlled by a signal that is sent by a residual current detector (42) in response to the detection of residual currents,
**characterized in**
**that** a bimetal plate (32) serving as thermal tripping device and, on top of it, an actuator plate (34) are arranged on a curved surface of a flange element (30) of the tripping device (4), whereas the bimetal plate (32) and the actuator plate (34) are penetrated by the tappet (26) and whereas the tappet (26) is equipped with a thickening (27) of its free end protruding from the tripping device (4), by means of which the actuator plate (34) activates the tappet (26) in the release direction in the case of the thermally induced snapping of the bimetal plate (32).

2. Circuit breaker according to Claim 1,
**characterized in**
**that** the residual current detector is a summation current transformer (42).

3. Circuit breaker according to Claim 1,
**characterized in**
**that** the circuit breaker (1) is designed as rail-mounted device.

## Revendications

1. Disjoncteur pour l'interruption automatique d'un courant électrique (I), comprenant un déclencheur (4) équipé d'un poussoir (26) pour l'actionnement d'un mécanisme de commutation (3) et une bobine (10) générant une force de déclenchement électromagnétique qui déplace le poussoir (26) depuis une première position à une position de déclenchement,
dans lequel une seconde bobine (12) est arrangée coaxialement à la première bobine (10) et la seconde bobine (12) est traversée par un courant (I) commandé par un signal qui est envoyé par un détecteur de courant de fuite (42) en réponse à la détection de courants de fuite
**caractérisé en ce que**
sur une surface incurvée d'un élément en flasque (30) du déclencheur (4) sont agencées une plaque bimétallique (32) servant de déclencheur thermique et, au-dessus de celle-ci, une plaque d'actionnement (34), dans lequel la plaque bimétallique (32) et la plaque d'actionneur (34) sont traversées par le poussoir (26) et le poussoir (26) est pourvu à son extrémité libre dépassant hors du déclencheur (4) d'un épaississement (27) au moyen duquel la plaque d'actionnement (34) actionne le poussoir (26) dans la direction de déclenchement dans le cas d'un basculement induit thermiquement de la plaque bimétallique (32).

2. Disjoncteur selon la revendication 1,
**caractérisé en ce que**
le détecteur de courant de fuite est un transformateur de courant sommateur (42).

3. Disjoncteur selon la revendication 1,
**caractérisé en ce que**
le disjoncteur (1) est réalisé comme un dispositif à monter sur rail.
